# EUROPEAN PATENT SPECIFICATION

(11) **EP 1 205 651 B1**
(45) Date of publication and mention of the grant of the patent: **10.08.2005**
(21) Application number: 00309995.9
(22) Date of filing: 10.11.2000
(51) Int. Cl.: F02B 31/08

(54) **An on-board diagnostic arrangement for an intake port control valve**
Onboard-Diagnoseeinrichtung für ein Saugkanalsteuerventil
Diagnostic de bord pour une valve de commande dans un canal d'admission

(43) Date of publication of application: 15.05.2002
(73) Proprietor: Ford Global Technologies, LLC, Dearborn, Michigan 48126-2490 (US)
(72) Inventor: Belton, Chris, Black Swan Close, Nottingham NG5 3JF (GB); Vincent, Darren, Warwick CV34 4NU (GB); King, Paul John, Loughborough, Leicestershire (GB)
(74) Representative: Farrow, Robert Michael

(56) References cited:
- EP-A- 0 266 212
- US-A- 5 609 132
- US-A- 5 634 445
- US-A- 5 755 201
- US-A- 6 135 085
- PATENT ABSTRACTS OF JAPAN vol. 012, no. 157 (M-696), 13 May 1988 (1988-05-13) & JP 62 276244 A (MAZDA MOTOR CORP), 1 December 1987 (1987-12-01)

## Description

This invention relates to a method for diagnosing operation of an intake system of an engine.

It is necessary for vehicle manufacturers to meet the emissions legislation prevalent in their markets. In some markets it is necessary to provide an on-board-diagnostic (OBD) capability to monitor features which can have an effect on exhaust gas emissions. In the event that a fault is determined to exist with a monitored feature, a fault flag is set to indicate the fault during later servicing of the vehicle. It is also necessary under certain failure conditions to flag a fault to the user so that he knows he should take the vehicle to a dealer for corrective action. Such visual indication is often in the form of an "engine check light" or "malfunction indicator lamp" (MIL).

It is known to provide an engine with an intake system which includes at least one port control throttle valve and one such arrangement is disclosed in US 5,740,778 and US 5,634,445. It is desirable for systems such as this to provide an on-board-diagnostic (OBD) arrangement to monitor the operation of such port control valves. US 6,135,085 discloses a control apparatus, for use in an intake system according to the preamble of claim 1, comprising a drive control apparatus for a swirl control valve which is arranged in an air intake port, and a failure diagnosis apparatus for diagnosing a failure of the swirl control valve. Moreover, US 5,755,201 discloses a failure diagnosis apparatus for an intake air throttle valve.

It is an object of this invention to provide a method for diagnosing operation of an intake system of an engine so as to distinguish between normal and failed conditions of a port valve control without adding hardware.

Accordingly, the present invention provides a method for diagnosing the operation of an intake system as claimed in claim 1.

Said engine may comprises a multi-bank engine having a port control valve situated within at least one said intake tract of each of a plurality of banks and the method may include closing the port control valve on one banks during a said diagnostic routine is performing to the port control valve of the other banks.

Said engine may comprise a multi-bank engine having a said exhaust gas sensor associated with an exhaust of each of a plurality of banks and the method may include;
i) calculating a difference value between exhaust gas feedback signals of a first said bank and a second said bank for a normal and a failed condition;
ii) determining an absolute difference value between said difference value and a reference value; and
iii) determining a normal/failure judgement value from said absolute difference value.

The invention will now be described by way of example only and with reference to the accompanying drawings, in which:

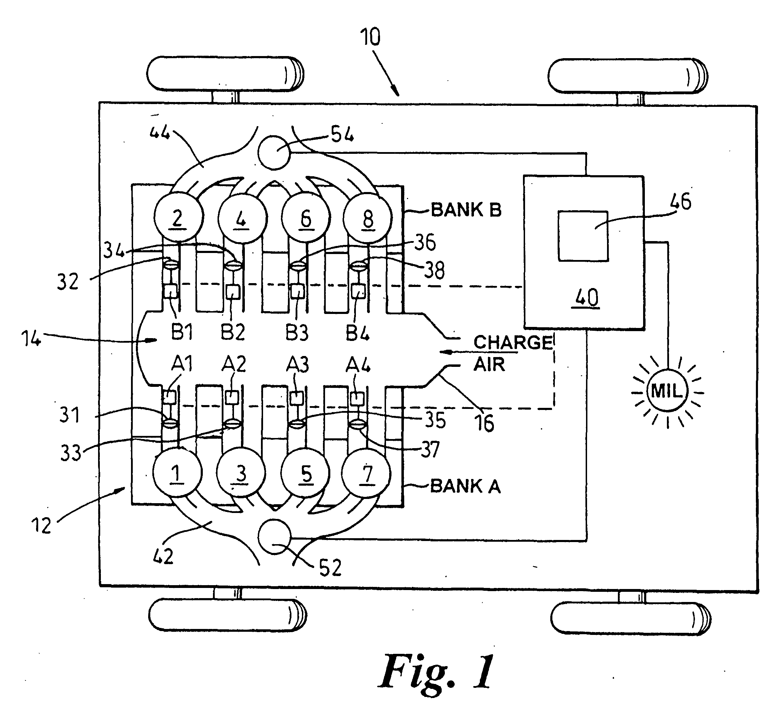

Figure 1 is a schematic diagram of a diagnostic arrangement according to an embodiment of the invention;

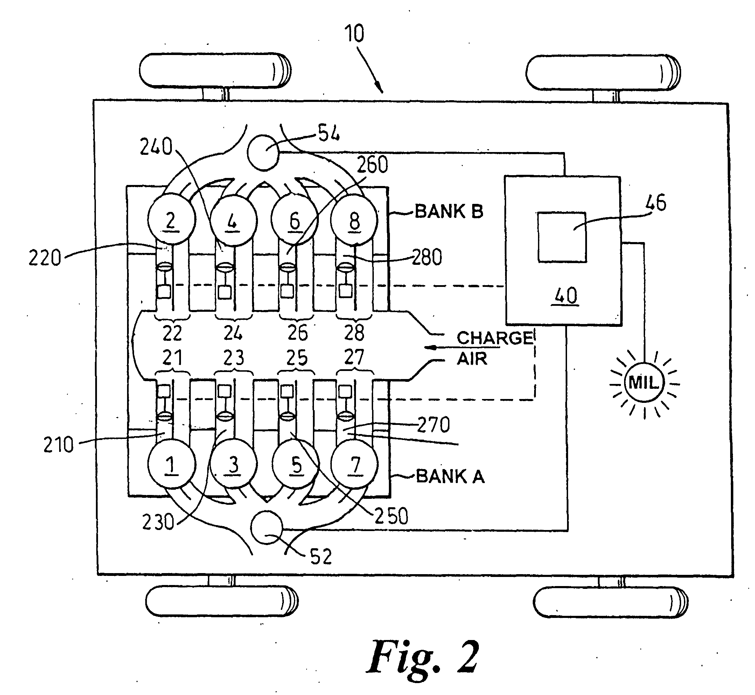

Figure 2 shows further detail of the diagnostic arrangement of Figure 1,

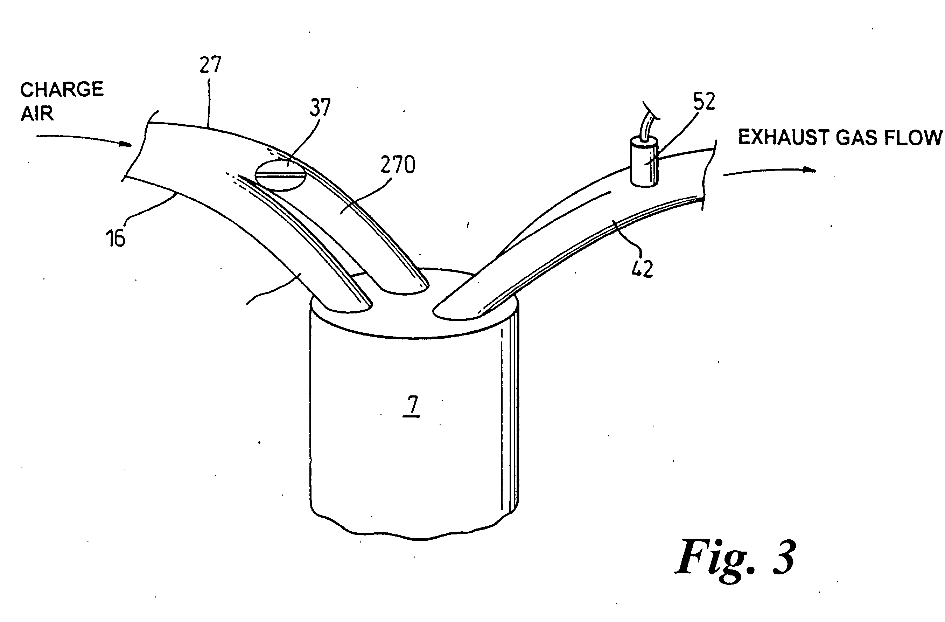

Figure 3 is a close-up view of part of the diagnostic arrangement of Figures 1 and 2; and
Figures 4, 5, 6 and 7 are graphical representations of principles of operation of the invention of Figures 1 to 3.

Referring to the figures, a vehicle 10 has a multi-bank engine in the form of an 8 cylinder V-form internal combustion engine 12 comprising a first bank A and a second bank B. Bank A houses the odd numbered cylinders 1, 3, 5, 7 and bank B houses the even numbered cylinders 2, 4, 6, 8. The engine 12 further comprises an intake system 14 for delivering charge air to the cylinders 1-8.

The intake system 14 includes an inlet manifold 16 which has twin intake tracts 21-28 leading to the cylinders 1-8, the twin intake tracts 21-28 each comprising an individual unrestricted intake tract (port 1) and a secondary disablement tract (port 2). Port 2 control valves 31-38 are situated one each in the port 2 disablement tracts 210-280 and the valves 31-38 are moved by associated actuators A1-A4, B1-B4. The actuators A1-A4, B1-B4 are under the command of a controller in the form of an engine management system (EMS) 40 and move the port 2 control valves 31-38 between open and closed positions grouped together (31, 33, 35, 37), (32, 34, 36, 38) in accordance with their respective banks A, B.

The engine 12 further comprises on each bank A, B an exhaust 42, 44 adapted to carry exhaust gases away from the cylinders (1, 3, 5, 7); (2, 4, 6, 8) of its respective bank A, B. Each exhaust 42, 44 mounts a respective exhaust gas sensor which is in the form of an air-to-fuel ratio (AFR) sensor 52, 54 and which provides to the EMS 40 an exhaust gas feedback signal in the form of an AFR signal which is indicative of the composition of the exhaust gas in its vicinity.

The EMS 40 includes a computer storage medium 46, on which is encoded a computer program for performing an on-board-diagnostic (OBD) routine for determining whether there is a fault in the operation of one or more of the port 2 control valves 31-38. If such a fault is diagnosed, then the EMS 40 illuminates a malfunction indicator lamp (MIL) and sets an internal fault flag for diagnosis during servicing.

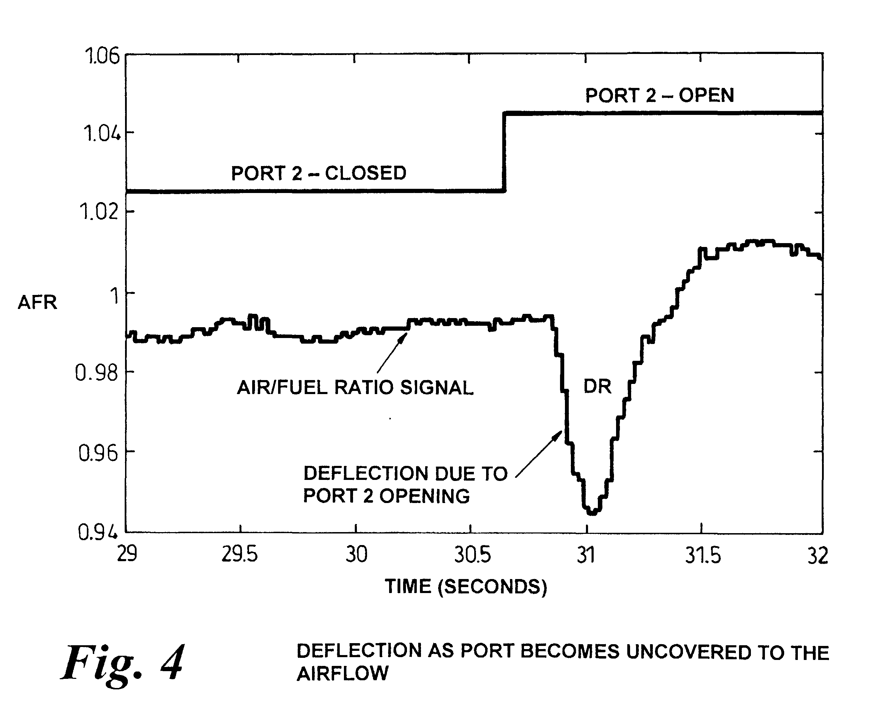

The OBD routine will now be described in greater detail, with particular reference to Figures 4 to 7.

The port 2 control valves 31-38 are moved under the command of the EMS 40 by the actuators A1-A4, B1-B4 between closed and open positions in banked groups (31, 33, 35, 37), (32, 34, 36, 38) so as to selectively enable and disable the port 2 tracts 210-280 in equivalent groups (210, 230, 250, 270), (220, 240, 260, 280) in accordance with their associated banks A; B.

When a port 2 control valve 31-38 is moved from a closed position towards an open position, its associated port 2 tract 210-280 is uncovered. The rush of charge down the newly uncovered tract 210-280 causes the AFR signal to deflect rich DR for a short period, i.e. towards a rich reading. A typical such deflection rich DR can be seen with particular reference to Figure 4.

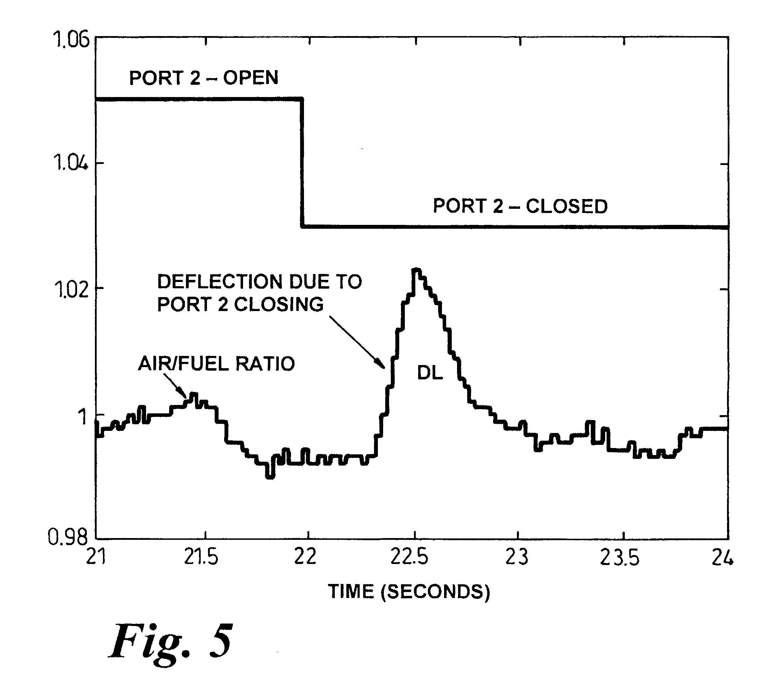

In a similar but reversed manner, when a port 2 control valve 31-38 is moved from an open position towards a closed position, its associated port 2 tract 210-280 is covered. The cutting off of charge down the newly covered tract 210-280 causes the AFR signal to deflect lean DL for a short period, i.e. towards a lean reading. A typical such deflection lean DL can be seen with particular reference to Figure 5.

The type of response DR, DL exhibited in Figures 4 and 5 forms the basis of the diagnostic routine invented by the applicants for determining whether the or each associated port 2 has been substantially uncovered to the airflow or substantially blocked off from it.

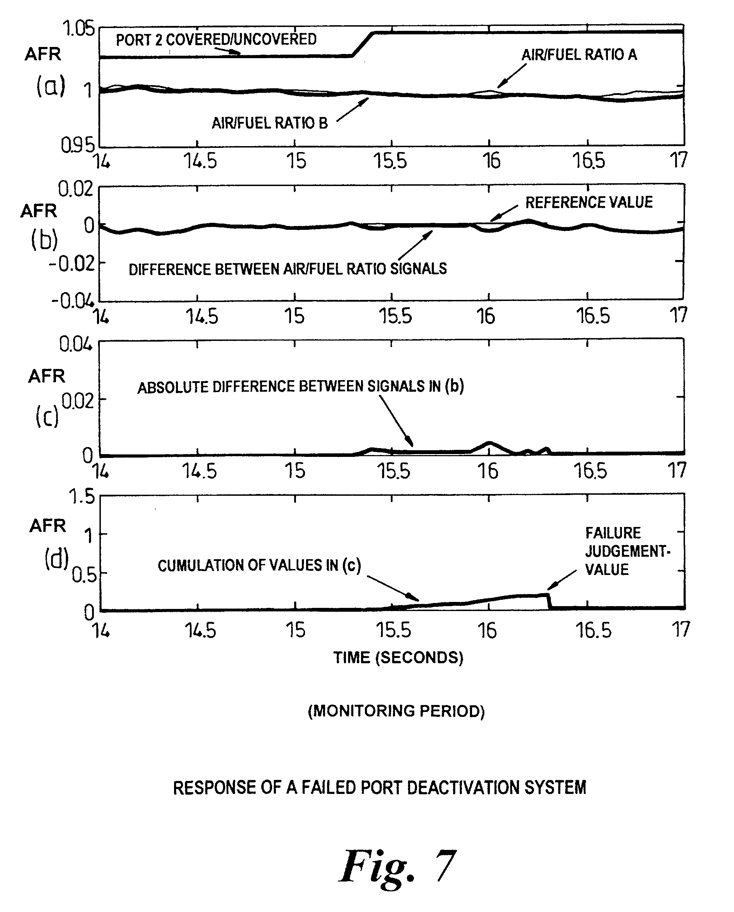

In a case where the associated port 2 control valve 31-38 fails to open or close as commanded, substantially no deflection in the sensor signal will be observed for that cylinder or bank of cylinders as the case may be and such a situation can be seen with particular reference to Figure 7.

To assess whether there is a fault in the port deactivation system for bank A when opening the port 2 control valves 31-38, all the port 2 control valves 32, 34, 36, 38 for bank B are closed during a monitoring period of the diagnostic routine and all the port 2 control valves 31, 33, 35, 37 for bank A are moved from a closed position towards an open position, i.e. they are uncovered together. This procedure is repeated in reverse to diagnose whether there is a fault with opening the port control valves 32, 34, 36, 38 of bank B, i.e. all the port 2's for bank B 220, 240, 260, 280 are uncovered while all the port 2's for bank A 210, 230, 250, 270 remain substantially covered during the portion of the diagnostic routine checking bank B. This tests successful opening by looking for deflections rich DR in the feedback signal from the AFR sensor 52, 54 associated with the bank A, B under diagnosis.

To test for successful closing, all the port 2 control valves 32, 34, 36, 38 for bank B are closed during a monitoring period of the diagnostic routine and all the port 2 control valves 31, 33, 35, 37 for bank A are moved from an open position towards a closed position, i.e. they are covered together. This procedure is repeated in reverse to diagnose whether there is a fault with closing the port 2 control valves 32, 34, 36, 38 of bank B, i.e. all the port 2's for bank B 220, 240, 260, 280 are covered, while all the port 2's for bank A 210, 230, 250, 270 remain substantially covered during the portion of the diagnostic routine checking bank B. This tests successful closing by looking for deflections lean DL in the feedback signal from the AFR sensor 52, 54 associated with the bank A, B under diagnosis.

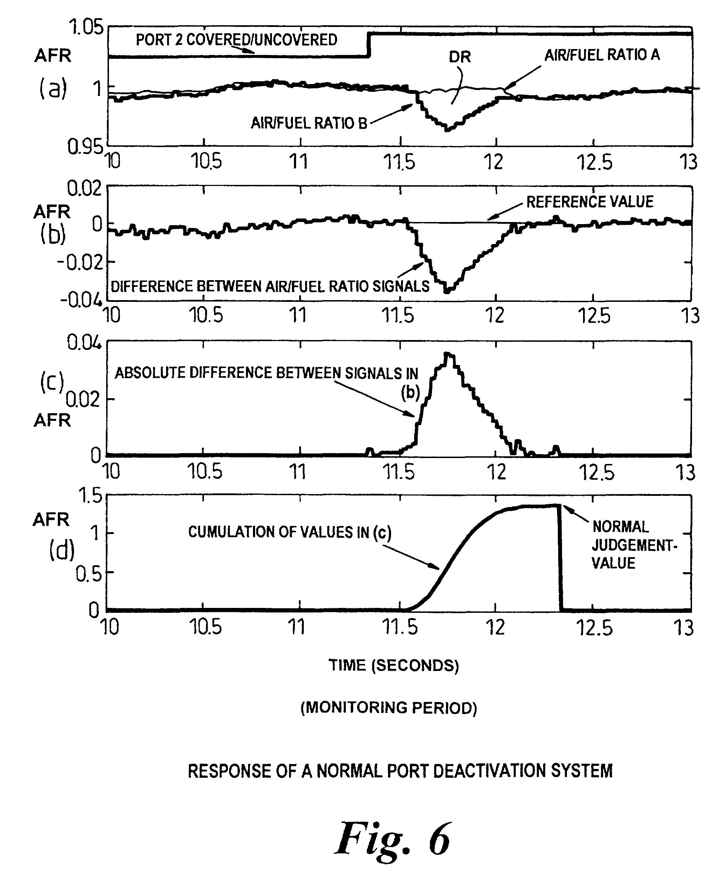

To take account of deviations in the AFR signal from the different banks A, B a comparison is made between the AFR signals of their respective sensors 52, 54 so as to develop a difference value between the feedback signals from the two banks A, B. A typical comparison for a normal condition and a fault condition can be seen with particular reference to Figures 6 and 7 respectively. Figure 6 deals with a successful opening situation akin to that of Figure 4, but it will be appreciated that a closing situation would be similar to a reversed form of Figure 6 and would therefore be akin to the situation shown in Figure 5. The failure situation exemplified in Figure 7 would not be greatly different for faults in opening or closing because in either situation there would be substantially no deflection.

In part (a) of Figure 6 it can be seen that, if there is no fault, there is a deflection rich DR in the AFR signal for the affected bank A; B recently after opening its associated port 2 control valves (31, 33, 35, 37); (32, 34, 36, 38). If there is no deflection, the AFR signal trace reflects that and the result is diagnosed as a fault condition, shown by way of example in part (a) of Figure 7.

The comparison is implemented by:
(i) calculating the difference between the AFR signals obtained from the sensors 52, 54 [shown in (b) of Figures 6 and 7 for a normal and a failed condition respectively];
(ii) filtering the AFR signal by holding the last difference value calculated prior to uncovering the or each port 2 under diagnosis; and
(iii) determining, during a specified monitoring time, the value of the absolute difference between the difference value given in (i) and the reference value given in (ii), which is shown in part (c) of Figures 6 and 7.

The culmination of (iii) leads to a final value which is used to determine normal and failure judgement values and is shown in part (d) of Figures 6 and 7 respectively.

The applicants have found it useful to define a set of entry conditions so as to optimise the time at which the diagnostic routine runs. For example, during normal running under closed loop feedback control, it may be found desirable to implement a compensation routine to take account of the transient differences in fuelling whilst opening or closing the port 2 control valves 31-38 and any such compensation routine should preferably be suspended or disabled around the time when the OBD port 2 disablement diagnostic routine is running. Furthermore, the routine should preferably be performed when the engine is running under substantially steady state conditions and when it is substantially fully warm. It may be found useful to disable further secondary systems whilst running the diagnostic routine of this invention, such as systems like air conditioning which might suddenly load the engine if they were to cut in during OBD.

During development work on the invention carried out by the applicants, it was found that a small portion of the AFR signal responses from both banks A, B were prone to some interference from noise. To account for this, the comparison method of the invention should be repeated several times to obtain a collection of results for steps (i) to (iii) above and then the average taken. This average value should then be compared to a constant value, which can be determined from development testing, to distinguish whether the or each relevant port 2 has been uncovered and thus determines the normal and/or failure judgement values.

It has also been found by the applicants that the deflections DR, DL become larger under two particular sets of circumstances. One of these is an increase in the amplitude of the deflection as the vehicle speed is reduced. The other is an increase in the amplitude of the deflection at low engine speed, air flow and engine load and at smaller throttle angles (for both opening and closing of the port 2 control valves 31-38).

By using an exhaust gas feedback signal which is often already available to the EMS 40 as part of a closed loop fuelling system, the OBD strategy of this invention can distinguish between normal and failed conditions of a port disablement system without adding hardware, such as would be the case for example if a potentiometer were to be employed to detect movement of the valves 31-38.

The embodiment described above is not considered to be limiting to the scope of the invention. This OBD strategy can, for example, be applied in a very similar fashion to V-type engines from a V-twin upwards or to other configurations of multi-bank engine such as a W-form. While the specific embodiment described relates to a V-engine having a single plenum intake system, it could also be applied to a twin plenum system in which it would simply appear to the EMS that all the ports on one bank were permanently covered. In similar fashion to the twin plenum embodiment, the diagnostic arrangement can also be applied to an in-line or to a single cylinder engine.

## Claims

1. A method for diagnosing the operation of an intake system (14) comprising a manifold (16) having a plurality of intake tracts (210-280) for conducting charge air towards cylinders (1-8) of an engine (12) and a port control valve (31-38) moved by an actuator (A1-A4, B1-B4) and situated within one of said intake tracts (210-280), the method including providing an exhaust gas feedback signal which is indicative of the composition of at least a portion of an exhaust gas of said engine (12) and performing a diagnostic routine using said exhaust feedback signal to determine whether there is a fault (MIL) in the operation of said port control valve (31-38), **characterised in that** said diagnostic routine includes sending a command to said actuator (A1-A4, B1-B4) to move said port control valve (31-38) towards an open/closed position from a substantially closed/open position and determining from a predetermined deflection rich/deflection lean for a short period in said exhaust gas feedback signal whether said port control valve (31-38) has recently moved towards said open/closed position from a closed/open position as commanded.

2. A method according to claim 1, said engine (12) comprising a multi-bank engine, in particular in V-form, having said port control valve (31-38) situated within at least one said intake tract (210-280) of each of a plurality of banks (A, B), **characterised in that** the method includes closing the port control valve on one of said banks (A, B) during said diagnostic routine while performing said diagnostic routine to the port control valve of the other of said banks (A, B), using said exhaust gas feedback signal associated with the other of said banks (A, B).

3. A method according to claim 2, said multi-bank engine, in particular in V-form, having an exhaust gas sensor (52, 54) associated with an exhaust (42, 44) of each of said plurality of banks (A, B), the method including;
i) calculating a difference value between exhaust gas feedback signals of the one of said banks (A, B) and the other of said banks (A, B) for a normal and a failed condition;
ii) determining an absolute difference value between said difference value and a reference value; and
iii) determining a normal/failure judgement value from said absolute difference value.

## Patentansprüche

1. Verfahren zur Diagnoseüberwachung des Betriebs eines Ansaugsystems (14), das einen Krümmer (16) mit mehreren Ansaugtrakten (210 - 280) zum Durchleiten von Ladeluft hin zu Zylindern (1 - 8) eines Motors (12) sowie ein durch einen Betätiger (A1 - A4, B1 - B4) bewegtes Kanalsteuerventil (31 - 38) umfaßt, das sich innerhalb einer der Ansaugtrakte (210 - 280) befindet, wobei das Verfahren das Bereitstellen eines Abgasrückkoppelungssignals beinhaltet, das die Zusammensetzung von mindestens einem Teil eines Abgases des Motors (12) sowie das Durchführen einer Diagnoseroutine unter Verwendung des Abgasrückkoppelungssignals beinhaltet, um festzustellen, ob im Betrieb des Kanalsteuerventils (31 - 38) ein Fehler (MIL) vorliegt, **dadurch gekennzeichnet, daß** die Diagnoseroutine das Senden eines Befehls an den Betätiger (A1 - A4, B1 - B4) beinhaltet, um das Kanalsteuerventil (31 - 38) hin zu einer offenen/geschlossenen Position aus einer im wesentlichen geschlossenen/offenen Position zu bewegen und anhand einer über einen kurzen Zeitraum erfolgenden vorbestimmten Fettgemisch-/Magergemischablenkung im Abgasrückkoppelungssignal zu bestimmen, ob sich das Kanalsteuerventil (31 - 38) kürzlich hin zur offenen/geschlossenen Position aus einer geschlossenen/offenen Position, wie befohlen, bewegt hat.

2. Verfahren nach Anspruch 1, bei dem der Motor (12) einen Mehrreihenmotor, insbesondere in V-Form, mit dem Kanalsteuerventil (31 - 38) umfaßt, das sich innerhalb von mindestens einem Ansaugtrakt (210 - 280) einer jeden von mehreren Reihen (A, B) befindet, **dadurch gekennzeichnet, daß** das Verfahren das Schließen des Kanalsteuerventils an einer der Reihen (A, B) während der Diagnoseroutine beinhaltet, während die Diagnoseroutine am Kanalsteuerventil an der anderen der Reihen (A, B) unter Verwendung des der anderen der Reihen (A, B) zugeordneten Abgasrückkoppelungssignals durchgeführt wird.

3. Verfahren nach Anspruch 2, bei dem der Mehrreihenmotor, insbesondere in V-Form, einen einem Auslaß (42, 44) einer jeden der mehreren Reihen (A, B) zugeordneten Abgassensor (52, 54) hat, wobei das Verfahren folgendes beinhaltet:
i) Berechnen eines Differenzwertes zwischen Abgasrückkoppelungssignalen der einen der Reihen (A, B) und der anderen der Reihen (A, B) für einen Normalzustand und einen Fehlerzustand;
ii) Bestimmen eines absoluten Differenzwertes zwischen dem Differenzwert und einem Referenzwert; und
iii) Bestimmen des Normal-/Fehler-Beurteilungswertes anhand des absoluten Differenzwertes.

## Revendications

1. Procédé pour diagnostiquer le fonctionnement d'un système d'admission (14), comprenant un collecteur (16) pourvu de plusieurs postes d'admission (210-280) pour conduire un air d'admission vers les cylindres (1-8) d'un moteur (12), et une valve de commande de port (31-38) déplacée par un actionneur (A1-A4, B1-B4) et située à l'intérieur d'un desdits postes d'admission (210-280), le procédé comprenant la production d'un signal de feedback de gaz d'échappement qui est indicatif de la composition d'au moins une partie d'un gaz d'échappement dudit moteur (12), et l'exécution d'une routine de diagnostic en utilisant ledit signal de feedback d'échappement pour déterminer s'il y a une erreur (MIL) dans le fonctionnement de ladite valve de commande de port (31-38), **caractérisé en ce que** ladite routine de diagnostic comprend le fait d'envoyer une commande audit actionneur (A1-A4, B1-B4) pour déplacer ladite valve de commande de port (31-38) en direction d'une position ouverte/fermée à partir d'une position substantiellement fermée/ouverte, et de déterminer, à partir d'une variation riche ou d'une variation pauvre prédéterminée sur une courte période dans ledit signal de feedback de gaz d'échappement si ladite valve de commande de port (31-38) s'est récemment déplacée en direction de ladite position ouverte/fermée à partir d'une position fermée/ouverte selon la commande.

2. Procédé selon la revendication 1, ledit moteur (12) comprenant un moteur à bancs multiples, en particulier en forme de V, ladite valve de commande de port (31-38) étant située à l'intérieur d'au moins un desdits postes d'admission (210-280) de chacun parmi une pluralité de bancs (A, B), **caractérisé en ce que** le procédé comprend la fermeture de la valve de commande sur un desdits bancs (A, B) pendant ladite routine de diagnostic tout en exécutant ladite routine de diagnostic sur la valve de commande de port de l'autre desdits bancs (A, B) en utilisant ledit signal de feedback de gaz d'échappement associé à l'autre desdits bancs (A, B).

3. Procédé selon la revendication 2, ledit moteur à bancs multiples, en particulier en forme de V, comprenant un capteur de gaz d'échappement (52, 54) associé à un échappement (42, 44) de chacun parmi ladite pluralité de bancs (A, B), le procédé comprenant les étapes consistant à:
i) calculer une valeur de différence entre des signaux de feedback de gaz d'échappement d'un desdits bancs (A, B) et de l'autre desdits bancs (A, B) pour une condition normale et pour une condition d'erreur;
ii) déterminer une valeur de différence absolue entre ladite valeur de différence et une valeur de référence; et
iii) déterminer une valeur de jugement de situation normale/d'erreur à partir de ladite valeur de différence absolue.
